# EUROPEAN PATENT APPLICATION

(11) **EP 4 852 569 A1**
(43) Date of publication of application: **09.12.2026**
(21) Application number: 24920996.6
(22) Date of filing: 02.02.2024
(51) Int. Cl.: H04W 72/12, H04L 5/16

(54) **COMMUNICATION METHOD, COMMUNICATION APPARATUS, AND COMMUNICATION SYSTEM**

(71) Applicant: Beijing Xiaomi Mobile Software Co., Ltd., Beijing 100085 (CN)
(72) Inventor: QIAO, Xuemei, Beijing 100085 (CN); LIU, Min, Beijing 100085 (CN); ZHU, Yajun, Beijing 100085 (CN)
(74) Representative: Stöckeler, Ferdinand
(86) International application number: PCT/CN2024/075404
(87) International publication number: WO 2025/160935

(57) **Abstract**

The present disclosure relates to the technical field of communications, and provides a communication method, a communication apparatus, and a communication system. For an HD-FDD terminal under an NTN network, first information can be determined, and then transmission behavior of the HD-FDD terminal can be determined on the basis of the first information, so that the transmission behavior of the HD-FDD terminal is defined. The transmission behavior can be used for processing overlap of corresponding scheduled resources between uplink transmission and downlink transmission in the time domain, so as to relax configuration or scheduling requirements of a network device. As a result, configuration or scheduling complexity of the network device is reduced, thereby lowering energy consumption on HD-FDD terminal and network device sides, and reducing spectrum resource waste.

## Description

### TECHNICAL FIELD

The present disclosure relates to the field of communication technologies, and in particular to a communication method, a communication device, and a communication system.

### BACKGROUND

Non-terrestrial Network (NTN) is an important technology introduced by 5G. It provides wireless resources through a network device such as a satellite or a drone instead of a ground base station.

### SUMMARY

The present disclosure provides a communication method, a communication device, and a communication system, to specify a transmission behavior of a half-duplex frequency division duplexing (HD-FDD) terminal in an NTN network, which is used to handle an overlap of scheduling resources corresponding to an uplink transmission and a downlink transmission in a time domain.

In a first aspect, an embodiment of the present disclosure provides a communication method, performed by an HD-FDD terminal. The method includes: determining first information; and determining a transmission behavior of the HD-FDD terminal according to the first information, where the transmission behavior is used to handle an overlap of scheduling resources corresponding to an uplink transmission and a downlink transmission in a time domain.

In a second aspect, an embodiment of the present disclosure provides a communication method, performed by a network device. The method includes: transmitting first information, where the first information is used to determine a transmission behavior of the HD-FDD terminal, and the transmission behavior is used to handle an overlap of scheduling resources corresponding to an uplink transmission and a downlink transmission in a time domain.

In a third aspect, an embodiment of the present disclosure provides a terminal, including: a processing module, configured to determine first information, and determine a transmission behavior of the HD-FDD terminal according to the first information, where the transmission behavior is used to handle an overlap of scheduling resources corresponding to an uplink transmission and a downlink transmission in a time domain.

In a fourth aspect, an embodiment of the present disclosure provides a network device, including: a transceiver module, configured to transmit first information, where the first information is used to determine a transmission behavior of the HD-FDD terminal, and the transmission behavior is used to handle an overlap of scheduling resources corresponding to an uplink transmission and a downlink transmission in a time domain.

In a fifth aspect, an embodiment of the present disclosure provides a communication device, including: one or more processors. The processors are configured to perform the method described in the embodiment of the first aspect.

In a sixth aspect, an embodiment of the present disclosure provides a communication device, including: one or more processors. The processors are configured to perform the method described in the embodiment of the second aspect.

In a seventh aspect, an embodiment of the present disclosure provides a communication system, including: a terminal and a network device. The terminal is configured to implement the method as described in the embodiment of the first aspect, and the network device is configured to implement the method as described in the embodiment of the second aspect.

In an eighth aspect, an embodiment of the present disclosure provides a communication method, including: transmitting, by a network device, first information to a half-duplex frequency division duplexing (HD-FDD) terminal; and receiving, by the HD-FDD terminal, the first information, and determining a transmission behavior of the HD-FDD terminal according to the first information, where the transmission behavior is used to handle an overlap of scheduling resources corresponding to an uplink transmission and a downlink transmission in a time domain.

In a ninth aspect, an embodiment of the present disclosure provides a computer storage medium. The computer storage medium stores computer-executable instructions that, when executed by a processor, cause the method described in the embodiment of the first aspect or the embodiment of the second aspect to be implemented.

The embodiments of the present disclosure provide a communication method, a communication device, and a communication system. For an HD-FDD terminal in an NTN network, first information may be determined, and then a transmission behavior of the HD-FDD terminal may be determined according to the first information, thereby specifying the transmission behavior of the HD-FDD terminal. The transmission behavior may be used to handle the overlap of the scheduling resources corresponding to the uplink transmission and the downlink transmission in the time domain, so as to reduce configuration or scheduling requirements of the network device, reduce the complexity of network device configuration or scheduling, lower energy consumption of both the HD-FDD terminal and the network device, and avoid the waste of spectrum resources.

Additional aspects and advantages of the present disclosure will be set forth in part in the following description, and in part will be apparent from the description, or may be learned through practice of the present disclosure.

### BRIEF DESCRIPTION OF THE DRAWINGS

The above and/or additional aspects and advantages of the present disclosure will become apparent and readily understood from the following description of embodiments in conjunction with the accompanying drawings.
FIG. 1 is a schematic diagram of an architecture of a communication system according to an embodiment of the present disclosure.
FIG. 2 is a flow chart of a communication method according to an embodiment of the present disclosure.
FIG. 3 is a flow chart of a communication method according to an embodiment of the present disclosure.
FIG. 4 is a flow chart of a communication method according to an embodiment of the present disclosure.
FIG. 5 is a block diagram of a communication device according to an embodiment of the present disclosure.
FIG. 6 is a block diagram of a communication device according to an embodiment of the present disclosure.
FIG. 7 is a schematic structural diagram of a communication device according to an embodiment of the present disclosure.
FIG. 8 is a schematic structural diagram of a chip provided in an embodiment of the present disclosure.

### DETAILED DESCRIPTION

The embodiments of the present disclosure are described in detail below. Examples of the embodiments are shown in the accompanying drawings, where the same or similar reference signs throughout the drawings denote the same or similar elements or elements having the same or similar functions. The embodiments described below with reference to the accompanying drawings are exemplary and are intended to explain the present disclosure and are not to be construed as limiting the present disclosure. It should be noted that the embodiments of the present disclosure and the features in the embodiments may be combined with each other unless there is a conflict.

To facilitate understanding, terms involved in the embodiments of the present disclosure are first introduced below

### 1. Non-terrestrial Network (NTN)

NTN is a key technology introduced by 5G. It provides wireless resources through a network device such as a satellite or a drone, rather than a ground base station. Depending on how the satellite processes signals, NTN may be divided into a transparent mode and a regenerative mode. In the transparent mode, an NTN ground station transmits a signal from a network device (gNB) to the satellite; and the satellite converts the signal to a satellite frequency band and then transmits it to user equipment (UE) via the satellite frequency band. Besides frequency conversion and signal amplification, the satellite does not demodulate the signal from the gNB, acting like a repeater. In the regenerative mode, the NTN ground station transmits the signal from the gNB to the satellite; and the satellite first demodulates and decodes the signal, then re-encodes and re-modulates it (a process known as regeneration), and transmits the regenerated signal via the satellite frequency band.

### 2. Half-Duplex Frequency Division Duplexing (HD-FDD)

HD-FDD is a communication technology that transmits and receives data on different frequencies, allowing either reception or transmission at a time. This technology can reduce equipment costs and space occupation, and can improve device integration capability.

### 3. Timing Advance (TA) pre-compensation

Due to a long distance between the UE and the satellite, the control plane (CP) in a physical random access channel (PRACH) cannot cover such a long transmission distance. Therefore, the NTN system has made the following design.
(1) For uplink frequency synchronization, the UE calculates a TA based on its own position acquired by a Global Navigation Satellite System (GNSS) module and satellite ephemeris information obtained from broadcast information of a base station, and performs TA pre-compensation prior to transmitting a PRACH, so as to ensure that PRACH signals transmitted by UEs at different locations arrive at the base station at substantially the same time (or at least within the same PRACH CP range).
(2) The size of the TA pre-compensated by the UE is related to an uplink time synchronization reference point set by the base station. In a case that an uplink time synchronization reference point is the base station, the total TA that the base station needs to compensate is a round-trip time of the service link and a round-trip time of a feeder link. In a case that the uplink time synchronization reference point is the satellite, the total TA that the UE needs to compensate is only the round-trip time of a service link.

### 4. TA pre-compensation reporting

Since the base station needs to know a round-trip delay between the UE and the base station for uplink scheduling to ensure that a scheduled uplink subframe is at least one round-trip delay apart from the current time, the UE needs to report its TA pre-compensation value to the base station. For example, a new Media Access Control (MAC) Control Element (CE) may be introduced, e.g., identified by a new Logical Channel Identification (LCID), and the TA pre-compensation value may be reported based on a TA change trigger mechanism.

When the UE triggers MAC CE-based TA reporting but no uplink resource is available, whether to trigger a Scheduling Request (SR) may be determined by the network via configuration.

Embodiments of the present disclosure provide a communication method, a communication device, and a communication system.

In a first aspect, an embodiment of the present disclosure provides a communication method, which is performed by an HD-FDD terminal. The method includes: determining first information; and determining a transmission behavior of the HD-FDD terminal according to the first information, where the transmission behavior is used to handle an overlap of scheduling resources corresponding to an uplink transmission and a downlink transmission in a time domain.

In the above embodiment, for a HD-FDD terminal in an NTN network, the first information may be determined, and then the transmission behavior of the HD-FDD terminal may be determined according to the first information, thereby specifying the transmission behavior of the HD-FDD terminal. The transmission behavior may be used to handle the overlap of scheduling resources corresponding to the uplink transmission and the downlink transmission in the time domain, so as to reduce configuration or scheduling requirements of the network device, reduce the complexity of network device configuration or scheduling, lower energy consumption of both the HD-FDD terminal and the network device, and avoid the waste of spectrum resources.

According to some embodiments of the first aspect, the first information includes at least one of:
a transmission priority; a first duration corresponding to TA pre-compensation reporting; a second duration for switching between an uplink and a downlink; or a first cell accessed by the HD-FDD terminal.

According to some embodiments of the first aspect, the transmission priority includes at least one of:
a priority of the uplink transmission; a priority of the downlink transmission; priorities of different channels; or priorities of different signals.

According to some embodiments of the first aspect, the transmission priority is determined based on at least one of:
a reception timing relationship of first downlink control information (DCI); a transmission cancellation condition; a number of retransmissions of information; a redundancy version of a transport block; a channel type; a signal type; first indication information; or a rule predefined by a protocol.

According to some embodiments of the first aspect, the first DCI includes: scheduling DCI and/or activation DCI.

According to some embodiments of the first aspect, determining the transmission behavior of the HD-FDD terminal according to the transmission priority includes: cancelling, by the HD-FDD terminal, reception of information from a network device, where a priority of the uplink transmission is higher than a priority of the downlink transmission; or cancelling, by the HD-FDD terminal, transmission of information to the network device, where the priority of the uplink transmission is lower than the priority of the downlink transmission.

According to some embodiments of the first aspect, in the case that the priority of the uplink transmission is lower than the priority of the downlink transmission, cancelling, by the HD-FDD terminal, the transmission of the information to the network device includes at least one of: not expecting, by the HD-FDD terminal, to cancel the uplink transmission on overlapping time-domain resources, where the priority of the uplink transmission is lower than the priority of the downlink transmission, and a duration from a time when DCI is received by the HD-FDD terminal to a start time of the uplink transmission is less than a first threshold; cancelling, by the HD-FDD terminal, the transmission of the information to the network device, where the priority of the uplink transmission is lower than the priority of the downlink transmission, and the duration from a time when DCI is received by the HD-FDD terminal to a start time of the uplink transmission is greater than the first threshold; or not expecting, by the HD-FDD terminal, to cancel the uplink transmission on overlapping time-domain resources within a first time range, and cancelling, by the HD-FDD terminal, the uplink transmission on remaining overlapping time-domain resources outside the first time range, where the priority of the uplink transmission is lower than the priority of the downlink transmission, and the duration from a time when DCI is received by the HD-FDD terminal to a start time of the uplink transmission is less than the first threshold.

In combination of some embodiments of the first aspect, the HD-FDD terminal performs a unidirectional transmission or does not perform any transmission within the first duration.

According to some embodiments of the first aspect, the method further includes: determining the first duration based on a time when the HD-FDD terminal triggers the TA pre-compensation reporting, or based on a time of a most recent TA pre-compensation adjustment by the HD-FDD terminal.

According to some embodiments of the first aspect, a length of the first duration is determined based on at least one of:
an uplink one-way propagation delay; a one-way propagation delay of a feeder link between a network device and a satellite; or an average scheduling waiting delay.

According to some embodiments of the first aspect, the HD-FDD terminal does not perform any transmission within the second duration.

According to some embodiments of the first aspect, the method further includes: determining the second duration based on a TA pre-compensation value; or determining the second duration based on a difference between a TA pre-compensation value of the HD-FDD terminal and a TA related value of a network device.

According to some embodiments of the first aspect, the second duration is determined based on at least one of:
a user equipment-specific timing advance (UE-specific TA); a satellite altitude; a timing advance offset threshold (offsetThresholdTA) configured by a network device; or a cell-common timing advance (cell-common TA).

According to some embodiments of the first aspect, determining the transmission behavior of the HD-FDD terminal according to the first cell includes: performing, by the HD-FDD terminal, a first behavior, where the first cell is a cell of a terrestrial network (TN); or not performing, by the HD-FDD terminal, the first behavior, where the first cell is a cell of a non-terrestrial network (NTN).

According to some embodiments of the first aspect, the determining the first information includes: receiving the first information transmitted by a network device.

In a second aspect, an embodiment of the present disclosure provides a communication method, performed by a network device. The method includes: transmitting first information, where the first information is used to determine a transmission behavior of the HD-FDD terminal, and the transmission behavior is used to handle an overlap of scheduling resources corresponding to an uplink transmission and a downlink transmission in a time domain.

According to some embodiments of the second aspect, the first information includes: the first information includes at least one of:
a transmission priority; a first duration corresponding to TA pre-compensation reporting; a second duration for switching between an uplink and a downlink; or a first cell accessed by the HD-FDD terminal.

According to some embodiments of the second aspect, the transmission priority includes at least one of:
a priority of the uplink transmission; a priority of the downlink transmission; priorities of different channels; or priorities of different signals.

According to some embodiments of the second aspect, the transmission priority is determined based on at least one of:
a reception timing relationship of first DCI; a transmission cancellation condition; a number of retransmissions of information; a redundancy version of a transport block; a channel type; a signal type; first indication information; or a rule predefined by a protocol.

According to some embodiments of the second aspect, the first DCI includes: scheduling DCI and/or activation DCI.

According to some embodiments of the second aspect, the transmission priority is used to determine that the HD-FDD terminal performs a unidirectional transmission.

According to some embodiments of the second aspect, the HD-FDD terminal performs a unidirectional transmission or does not perform any transmission within the first duration.

According to some embodiments of the second aspect, the first duration is determined based on at least one of:
a time when the HD-FDD terminal triggers the TA pre-compensation reporting; or a time of a most recent TA pre-compensation adjustment by the HD-FDD terminal.

According to some embodiments of the second aspect, a length of the first duration is determined based on at least one of:
an uplink one-way propagation delay; a one-way propagation delay of a feeder link between the network device and a satellite; or an average scheduling waiting delay.

According to some embodiments of the second aspect, the HD-FDD terminal does not perform any transmission within the second duration.

According to some embodiments of the second aspect, the second duration is determined based on one of:
a TA pre-compensation value; or a difference between a TA pre-compensation value of the HD-FDD terminal and a TA related value of the network device.

In combination of some embodiments of the second aspect, the first cell is a cell of a TN or a cell of an NTN.

In a third aspect, an embodiment of the present disclosure provides an HD-FDD terminal, which includes: a processing module, configured to determine first information, and determine a transmission behavior of the HD-FDD terminal according to the first information, where the transmission behavior is used to handle an overlap of scheduling resources corresponding to an uplink transmission and a downlink transmission in a time domain.

In a fourth aspect, an embodiment of the present disclosure provides a network device, which includes: a transceiver module, configured to transmit first information, where the first information is used to determine a transmission behavior of the HD-FDD terminal, and the transmission behavior is used to handle an overlap of scheduling resources corresponding to an uplink transmission and a downlink transmission in a time domain.

In a fifth aspect, an embodiment of the present disclosure provides a communication device, which may be a terminal or a network device, and includes: one or more processors. The processor of the terminal is configured to perform the method described in the embodiments of the first aspect, and the processor of the network device is configured to perform the method described in the embodiments of the second aspect.

In a sixth aspect, an embodiment of the present disclosure provides a communication system, including: a terminal and a network device. The terminal executes the method described in the embodiment of the first aspect, and the network device executes the method described in the embodiment of the second aspect.

In a seventh aspect, an embodiment of the present disclosure provides a communication method, which includes: transmitting, by a network device, first information to a half-duplex frequency division duplexing (HD-FDD) terminal; and receiving, by the HD-FDD terminal, the first information, and determining a transmission behavior of the HD-FDD terminal according to the first information, where the transmission behavior is used to handle an overlap of scheduling resources corresponding to an uplink transmission and a downlink transmission in a time domain.

In an eighth aspect, an embodiment of the present disclosure provides a computer storage medium, which stores computer-executable instructions; the computer-executable instructions, in a case that executed by a processor, cause to the method described in the embodiment of the first aspect or the embodiment of the second aspect to be implemented.

In a ninth aspect, an embodiment of the present disclosure provides a program product. The program product, in a case that executed by a communication device, causes the communication device to perform the method described in the embodiment of the first aspect or the embodiment of the second aspect.

In a tenth aspect, an embodiment of the present disclosure provides a computer program, which, in a case that executed on a computer, enables the computer to perform the method described in the embodiment of the first aspect or the embodiment of the second aspect.

In an eleventh aspect, an embodiment of the present disclosure provides a chip or a chip system. The chip or chip system includes a processing circuit configured to perform the method according to the embodiment of the first aspect or the embodiment of the second aspect.

It is understandable that the terminal, the network device, the communication system, and the storage medium mentioned above are all configured to execute the methods provided in the embodiments of the present disclosure. Therefore, for beneficial effects that can be achieved, reference can be made to the beneficial effects in the corresponding methods, which will not be repeated here.

The embodiments of the present disclosure provide a communication method, a terminal, a network device, and a communication system. In some embodiments, terms such as communication method, information processing method, information transmitting method, and information receiving method are interchangeable; terms such as communication device, information processing device, information transmitting device, and information receiving device are interchangeable; and terms such as information processing system, communication system, information transmitting system, and information receiving system are interchangeable.

The embodiments of the present disclosure are not exhaustive and are merely illustrative of some embodiments, and are not intended to limit the scope of protection of the present disclosure. In the absence of conflict, each step in a certain embodiment may be implemented as an independent embodiment, and the steps may be combined in any manner. For example, a solution obtained by removing some steps from a certain embodiment may also be implemented as an independent embodiment, and the order of the steps in a certain embodiment may be arbitrarily exchanged. In addition, the optional implementations in a certain embodiment may be arbitrarily combined; and different embodiments may be arbitrarily combined. For example, some or all steps of different embodiments may be arbitrarily combined, and a certain embodiment may be arbitrarily combined with optional implementations of other embodiments.

In the embodiments of the present disclosure, unless otherwise specified or logically inconsistent, the terms and/or descriptions between different embodiments are consistent and may be referenced by each other. Technical features in different embodiments may be combined to form a new embodiment based on their inherent logical relationships.

The terms used in the embodiments of the present disclosure are only for the purpose of describing specific embodiments and are not intended to limit the present disclosure.

In the embodiments of the present disclosure, unless otherwise specified, elements expressed in the singular, such as "a," "an," "the," "the above," "the aforementioned," "this," etc. may mean "one and only one," or "one or more," "at least one," etc. For example, when articles such as "a," "an," and "the" are used in an English translation, the noun following the article may be understood as singular or plural.

In the embodiments of the present disclosure, "plurality" refers to two or more.

In some embodiments, terms such as "at least one," "one or more," "a plurality of," and "multiple" may be used interchangeably.

In the embodiments of the present disclosure, expressions such as "at least one of A, B, and C" or "A and/or B and/or C" include a case where any one of A, B, C, etc. exists alone, and also include any combination of any multiple of A, B, C, etc., and each case may exist independently. For example, "at least one of A, B, and C" includes A alone, B alone, C alone, a combination of A and B, a combination of A and C, a combination of B and C, and a combination of A, B, and C. For example, "A and/or B" includes A alone, B alone, and both A and B.

In some embodiments, expressions such as "in one case, A; in another case, B" or "in response to one case, A; in response to another case, B" may include, depending on situations, the following technical solutions: performing A independently of B (i.e., in some embodiments, A); performing B independently of A (i.e., in some embodiments, B); selectively performing A or B (i.e., in some embodiments, selecting one from A and B); or performing both A and B (i.e., in some embodiments, both A and B). The same applies when there are more branches, such as A, B, and C.

Prefixes such as "first" and "second" used in the embodiments of the present disclosure are only for distinguishing different description objects and do not impose any limitation on the position, order, priority, quantity, or content of the description objects. For details of the description objects, reference should be made to the context of the claims or embodiments, and no unnecessary limitation should be construed due to the use of such prefixes. For example, if the description object is a "field," the ordinal numbers in "first field" and "second field" do not limit the position or order between the fields. "First" and "second" do not limit whether the fields they modify are in the same message, nor do they limit the order of the "first field" and the "second field." As another example, if the description object is a "level," the ordinal numbers in "first level" and "second level" do not limit the priority between the levels. As yet another example, the quantity of description objects is not limited by the ordinal numbers and may be one or more. Taking "first device" as an example, the number of "devices" may be one or more. Furthermore, objects modified by different prefixes may be the same or different. For example, if the description object is "device," the "first device" and "second device" may be the same device or different devices, and their types may be the same or different. As another example, if the description object is "information," the "first information" and "second information" may be the same information or different information, and their contents may be the same or different.

In some embodiments, expressions such as "including A," "comprising A," "used to indicate A," and "carrying A" may be interpreted as directly including/carrying A or indirectly indicating A.

In some embodiments, terms such as "in response to," "in response to determining," "in a case," "at the time of," "when," "if," etc., may be used interchangeably.

In some embodiments, terms such as "greater than," "greater than or equal to," "not less than," "more than," "more than or equal to," "not less than," "higher than," "higher than or equal to," "not lower than," and "above" may be interchangeable; and terms such as "less than," "less than or equal to," "not greater than," "less than," "less than or equal to," "not more than," "lower than," "lower than or equal to," "not higher than," and "below" may be interchangeable.

In some embodiments, apparatuses and the like may be interpreted as physical entities or virtual entities, and their names are not limited to those listed in the embodiments. Terms such as "apparatus," "device," "equipment," "circuit," "network element," "node," "function," "unit," "section," "system," "network," "chip," "chip system," "entity," and "subject" may be used interchangeably.

In some embodiments, "network" may be interpreted as a device included in the network (e.g., access network device, core network device, etc.).

In some embodiments, terms such as "access network device," "radio access network device (RAN device)," "base station (BS)," "radio base station," "fixed station," "node," "access point," "transmission point (TP)," "reception point (RP)," "transmission/reception point (TRP)," "panel," "antenna panel," "antenna array," "cell," "macro cell," "small cell," "femto cell," "pico cell," "sector," "cell group," "carrier," "component carrier," and "bandwidth part (BWP)" may be used interchangeably.

In some embodiments, terms such as "terminal," "terminal device," "user equipment (UE)," "user terminal," "mobile station (MS)," "mobile terminal (MT)," "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," and "client" may be used interchangeably.

In some embodiments, the access network device, the core network device, or the network device may be replaced by a terminal. For example, the various embodiments of the present disclosure may also be applied to a configuration in which communication between the access network device, the core network device, or the network device and the terminal is replaced by communication between multiple terminals (e.g., device-to-device (D2D), vehicle-to-everything (V2X), etc.). In this case, the terminal may have all or part of the functions of the access network device. In addition, terms such as "uplink" and "downlink" may be replaced by terms corresponding to communication between terminals (e.g., "sidelink"). For example, uplink channel and downlink channel may be replaced by sidelink channel, and uplink and downlink may be replaced by sidelink.

In some embodiments, the terminal may be replaced by an access network device, a core network device, or a network device. In this case, the access network device, the core network device, or the network device may have all or part of the functions of the terminal.

In some embodiments, obtaining data, information, etc. may comply with the laws and regulations of the country where the data is obtained.

In some embodiments, data, information, etc. may be obtained with the user's consent.

In some embodiments, the threshold mentioned in the embodiments may be a numerical value, a constant, or some fixed value.

In addition, each element, each row, or each column in the tables of the embodiments of the present disclosure may be implemented as an independent embodiment, and any combination of elements, rows, and columns may also be implemented as an independent embodiment.

The correspondences shown in the tables of the present disclosure may be configured or predefined. The values of the information in each table are merely examples and may be configured to other values, which are not limited by the present disclosure. When configuring correspondences between information and parameters, it is not necessarily required to configure all the correspondences shown in each table. For example, in the tables of the present disclosure, the correspondences shown in certain rows may not be configured. For another example, appropriate deformation adjustments may be made based on the above tables, such as splitting, merging, etc. The names of the parameters shown in the titles of the above tables may also adopt other names that may be understood by a communication device, and the values or representations of the parameters may also adopt other values or representations that may be understood by a communication device. In implementing the above tables, other data structures may also be used, such as arrays, queues, containers, stacks, linear lists, pointers, linked lists, trees, graphs, structures, classes, heaps, hash tables, etc.

In the present disclosure, "predefined" may be understood as defined, defined in advance, stored, pre-stored, pre-negotiated, pre-configured, solidified, or pre-burned.

The communication method, terminal, network device and communication system provided by the present disclosure are described in detail below with reference to the accompanying drawings.

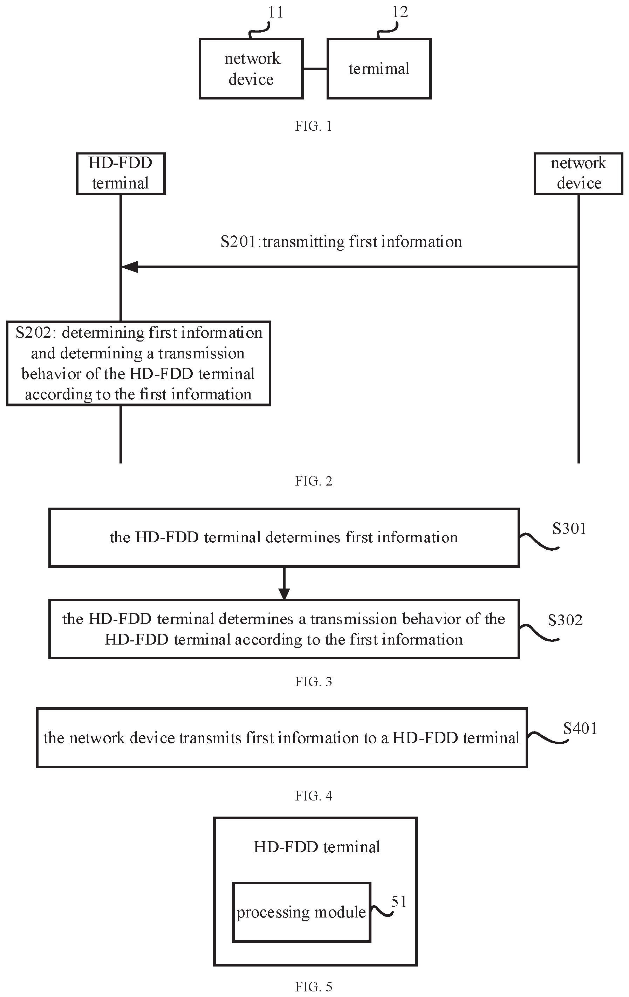

FIG. 1 shows a structural diagram of a communication system according to an embodiment of the present disclosure. As shown in FIG. 1, the system architecture may include a network device 11 and a terminal 12.

In some examples, the network device 11 may be an entity on the network side for transmitting or receiving signals. For example, the network device 11 may be a communication satellite, an evolved NodeB (eNB), a transmission reception point (TRP), a next generation NodeB (gNB) in an NR system, a base station in other future mobile communication systems, or an access node in a Wireless Fidelity (WiFi) system. The embodiments of the present disclosure do not limit a specific technology or a specific device form adopted by the network device 11. The network device 11 provided in the embodiments of the present disclosure may include a central unit (CU) and a distributed unit (DU), where the CU may also be referred to as a control unit. The CU-DU structure may be used to split the protocol layer of a network device, such as a base station, functions of some protocol layers are configured in the CU for centralized control, while the functions of the remaining part or all of the protocol layers are distributed in the DU, and the DU is centrally controlled by the CU.

In some examples, the terminal 12 may be referred to as an HD-FDD terminal, a terminal device (terminal), a user equipment, a mobile station (MS), a mobile terminal (MT), etc. The terminal 12 may also be a vehicle with communication capabilities, a smart vehicle, a mobile phone, a wearable device, a tablet computer (Pad), a computer with wireless transceiving capabilities, a virtual reality device, an augmented reality device, a wireless terminal device in industrial control, a wireless terminal device in autonomous driving, a wireless terminal device in remote medical surgery, a wireless terminal device in a smart grid, a wireless terminal device in transportation safety, a wireless terminal device in a smart city, a wireless terminal device in a smart home, etc. The embodiments of the present disclosure do not limit a specific technology or a specific device form adopted by the terminal 12.

It may be understood that the communication processing system described in the embodiments of the present disclosure is for the purpose of more clearly illustrating the technical solutions of the embodiment of the present disclosure, and does not constitute a limitation onto the technical solution proposed in the embodiment of the present disclosure. A person skilled in the art may appreciate that with the evolution of the system architecture and the emergence of new service scenarios, the technical solutions proposed in the embodiments of the present disclosure are also equally applicable to similar technical problems.

The following embodiments of the present disclosure may be applied to the communication processing system shown in FIG. 1, or a part thereof, but are not limited thereto. The entities shown in FIG. 1 are illustrative only. The communication processing system may include all or part of the entities shown in FIG. 1, or may include other entities not shown in FIG. 1. The number and form of the entities may be arbitrary. The connection relationship between the entities is illustrative only. The entities may be connected or disconnected, and the connection may be in any manner, whether direct or indirect, and wired or wireless.

The embodiments of the present disclosure may be applied to satellite communications, Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 5G NR, Future Radio Access (FRA), New-Radio Access Technology (RAT), New Radio (NR), New Radio Access (NX), Future generation radio access (FX), Global System for Mobile communications (GSM (registered trademark)), CDMA2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), Public Land Mobile Network (PLMN) networks, Device-to-Device (D2D) systems, Machine-to-Machine (M2M) systems, Internet of Things (IoT) systems, Vehicle-to-Everything (V2X), systems utilizing other communication methods, and next-generation systems based on or extending from these methods. Furthermore, multiple systems may be combined (for example, a combination of LTE or LTE-A with 5G).

In some examples, the network device 11 transmits first information to the terminal 12, the terminal 12 receives the first information transmitted by the network device 11, and determines a transmission behavior of a HD-FDD terminal according to the first information. The transmission behavior may be used to handle an overlap of scheduling resources corresponding to an uplink transmission and a downlink transmission in a time domain.

This embodiment is directed to a HD-FDD terminal in an NTN network. The first information may be obtained, and the transmission behavior of the HD-FDD terminal may be determined according to the first information, thereby specifying the transmission behavior of the HD-FDD terminal. The transmission behavior may be used to handle the overlap of the scheduling resources corresponding to the uplink transmission and the downlink transmission in the time domain, so as to reduce the configuration or scheduling requirements of the network device, reduce the complexity of network device configuration or scheduling, lower energy consumption of both the HD-FDD terminal and the network device, and avoid the waste of spectrum resources.

Furthermore, to illustrate the specific execution process of the above-mentioned communication processing system, FIG. 2 shows a schematic diagram of a communication method according to an embodiment of the present disclosure. The method is applied to the above-mentioned communication system, as shown in FIG. 2, and may include the following steps.

Step S201: the network device transmits first information to the HD-FDD terminal.

In some embodiments, the HD-FDD terminal receives the first information transmitted by the network device.

In some embodiments, the first information may be communication information, such as indication information or signaling. For example, the first information may be carried and transmitted through radio resource control (RRC) signaling and/or media access control layer (MAC) Control Element (CE) and/or Downlink Control Information (DCI) and/or System Information Block (SIB).

Step S202: the HD-FDD terminal determines a transmission behavior of the HD-FDD terminal according to the first information.

In some embodiments, the HD-FDD terminal may determine the first information and determine the transmission behavior of the HD-FDD terminal according to the first information. The first information may be determined in various ways. In some embodiments, the HD-FDD terminal may obtain the first information from a network device, i.e., use information received from the network device as the first information. Alternatively, the HD-FDD terminal may determine the first information according to a rule predefined by a protocol, or derive the first information by itself, e.g., based on satellite ephemeris information, its own position information, and the like. In some examples, in a case that the HD-FDD terminal determines the first information according to the rule predefined by the protocol or derives the first information by itself, the HD-FDD terminal may transmit the first information to the network device, so that the network device can perform corresponding scheduling adjustments according to the first information determined by the terminal.

In some embodiments, the transmission behavior is used to handle overlapping scheduling resources corresponding to the uplink transmission and the downlink transmission in the time domain.

In some embodiments, the uplink transmission and the downlink transmission may refer to transmission between the HD-FDD terminal and the network device, or may refer to transmission between the HD-FDD terminal and other terminals, etc.

For NTN networks, when the network side performs dynamic grant (DG) uplink scheduling and DG downlink scheduling, TAs of the network side and the HD-FDD terminal side may be misaligned in some cases. This is because an open-loop TA performed autonomously on the terminal side, that is, the TA pre-compensation value calculated by the HD-FDD terminal based on the ephemeris information broadcast by the network device and its own GNSS, cannot be notified to the network device in time. For example, an uplink MAC CE TA command is not transmitted in time due to a propagation delay or a scheduling waiting delay, or reporting of the open-loop TA pre-compensation value is disabled (for example, in a case that TAR-Config is not configured), or a TA adjustment cannot be triggered because a certain threshold has not been reached between two TA adjustments.

Since the TAs of the network device side and the HD-FDD terminal side are not aligned, the network device cannot accurately determine a TA time between the uplink and downlink transmissions on the HD-FDD terminal side. Consequently, it cannot guarantee that no overlap will occur between the uplink and downlink transmissions during each scheduling or higher-layer configuration. In other words, the scheduling resources corresponding to the uplink and downlink transmissions are prone to overlap in the time domain.

Furthermore, when the network performs semi-static uplink and downlink configuration, the TA pre-compensation value may be determined only based on the timing relationship between the uplink and downlink on the terminal side at the time of configuration. Even if the TA pre-compensation adjustment performed by the HD-FDD terminal is promptly reported to the network, it may be difficult for the network side to perform real-time RRC parameter update in every instance, which would impose excessive demands on the network side. Therefore, it is desirable to reduce these requirements on the network side.

To this end, this embodiment clarifies the transmission behavior of the HD-FDD terminal in the NTN network. This transmission behavior may be used to handle the overlap of scheduling resources corresponding to the uplink transmission and the downlink transmission in the time domain, so as to reduce configuration or scheduling requirements of the network device, reduce the complexity of configuration or scheduling of the network device, lower the energy consumption of both the HD-FDD terminal and the network device, and avoid the waste of spectrum resources.

In some embodiments, the method of this embodiment may be applicable to at least one of the following scenarios involving overlap of scheduling resources.

A1. Scheduling resources corresponding to a dynamic grant (DG) uplink channel/signal and a DG downlink channel/signal overlap in the time domain.

The uplink channel/signal may include: a Physical Uplink Shared Channel (PUSCH), a Physical Uplink Control Channel (PUCCH), a Sounding Reference Signal (SRS), and the like.

The downlink channel/signal may include: DG Physical Downlink Shared Channel (PDSCH), DG Channel State Information-Reference Signal (CSI-RS), etc.

B1. Scheduling resources corresponding to a semi-static uplink channel/signal and a semi-static downlink channel/signal overlap in the time domain.

As an example, scheduling resources corresponding to dedicated higher layer parameters configuring transmission and dedicated higher layer parameters configuring reception overlap in the time domain.

The downlink channel/signal may include: User Search Space (USS), Physical Downlink Control Channel (PDCCH), PDSCH, CSI-RS, and the like. The uplink channel/signal may include: PUSCH, PUCCH, SRS, and the like.

As an example, scheduling resources corresponding to the dedicated higher layer parameters configuring transmission and cell-specific higher layer parameters configuring reception overlap in the time domain.

The downlink channel/signal may include: Type-0 Common Search Spaceset (CSS) PDCCH, Type-0A CSS PDCCH, Type-1 CSS PDCCH, Type-2 CSS PDCCH, and the like. The uplink channel/signal may include: PUSCH, PUCCH, SRS, and the like.

In some embodiments, the first information may include at least one of:
A2, a transmission priority, e.g., a transmission priority of a physical layer channel/signal between the HD-FDD terminal and the network device; B2, a first duration corresponding to TA pre-compensation reporting, e.g., a time gap; C2, a second duration for switching between an uplink and a downlink, e.g., a switching time; D2, a first cell accessed by the HD-FDD terminal, i.e., a serving cell accessed by the HD-FDD terminal.

In some embodiments, the transmission priority may be a specific value, e.g., high priority, medium priority, low priority, etc.; or it may be a relative relationship, e.g., an uplink has a higher priority than a downlink.

In some embodiments, the transmission priority may include at least one of:
A3, a priority of the uplink transmission; B3, a priority of the downlink transmission; C3, priorities of different channels; or D3, priorities of different signals.

For example, in this embodiment, the transmission priority is determined, and in a case that scheduling resources corresponding to uplink and downlink transmissions overlap in the time domain, the HD-FDD terminal may, according to the transmission priority, perform only a transmission of a channel/signal having a higher priority, for example, performing only the uplink transmission while canceling the downlink reception, or performing only the downlink reception while canceling the uplink transmission.

In some embodiments, the transmission priority is determined based on at least one of:
A4, first indication information, such as the first indication information transmitted by the network device; B4, a rule predefined by a protocol; C4, a reception timing relationship of first DCI; D4, a transmission cancellation condition; E4, a number of retransmissions of information; F4, a redundancy version of a transport block; G4, a channel type; or H4, a signal type.

In some embodiments, the HD-FDD terminal may determine the transmission priority based on the first indication information (e.g., configuration or indication information) transmitted by the network device. For example, the HD-FDD terminal may determine the transmission priority based on configuration or indication from the network device. For example, a transmission priority of a physical channel/signal is determined based on the configuration or the indication from the network device. For example, an uplink DCI may indicate a PUSCH transmission with a first priority, and a downlink DCI may indicate a PDSCH transmission with a second priority, where the first priority is higher than the second priority. Therefore, if an overlap occurs between the PUSCH and the PDSCH, the PUSCH transmission is prioritized.

In some possible embodiments, the network configures or indicates that different Hybrid Automatic Repeat Request Process Numbers (HPNs) have different priorities for data channels. The priority of the data channel is then determined based on the priority corresponding to the HPN. For example, a first PUSCH transmission of HPN#m has a first priority, a second PUSCH transmission with HPN#n has a fourth priority, a first PDSCH transmission with HPN#p has a second priority, and a second PDSCH transmission with HPN#k has a third priority, where a priority order from high to low is: first priority > second priority > third priority > fourth priority. If time-domain resources of the first PUSCH and the first PDSCH overlap, the HD-FDD terminal transmits the first PUSCH and cancels reception of the first PDSCH based on the above priority relationship. If time-domain resources of the second PUSCH and the second PDSCH overlap, the HD-FDD terminal receives the second PDSCH and cancels transmission of the second PUSCH based on the above priority relationship.

In some examples, for configuration signaling or indication signaling of the network device, a new field may be introduced into the scheduling DCI or the activation DCI, and the transmission priority may be determined based on the introduced new field; or an existing field in the scheduling DCI or the activation DCI may be reused, and the transmission priority may be determined based on the reused existing field; or the network device may configure or indicate it through Radio Resource Control (RRC) or System Information Block (SIB) signaling, etc.

In some examples, if the indication is based on DCI, the same DCI may simultaneously indicate transmissions of two different channels/signals in the same direction. In this case, the two channels/signals in the same direction may share the same priority indication.

In addition to determining the transmission priority based on network indication, in some embodiments, the HD-FDD terminal may determine the transmission priority based on the rule predefined by the protocol. For example, the protocol may predefine that the downlink transmission has a higher priority, or that the uplink transmission has a higher priority.

In some embodiments, the HD-FDD terminal may determine the transmission priority based on the reception timing relationship of the first DCI. For example, in some examples, the first DCI may include: scheduling DCI and/or activation DCI; and the transmission priority may be determined based on the reception timing relationship of the scheduling DCI and/or the activation DCI. For example, a channel scheduled by a DCI with a later time-domain position has a higher transmission priority, while a channel scheduled by a DCI with an earlier time-domain position has a lower transmission priority.

In some embodiments, it may be determined that a transmission priority in a certain direction is higher, for example, the uplink transmission has a higher priority, or the downlink transmission has a higher priority.

In some embodiments, the transmission priority may be determined based on the transmission cancellation condition. For example, a more complex transmission cancellation condition may result in a higher corresponding transmission priority. For instance, if the transmission cancellation condition for the uplink transmission is more complex, the uplink may have a higher transmission priority; if the transmission cancellation condition for channel A is more complex, channel A may have a higher transmission priority; or if the transmission cancellation condition for signal B is more complex, signal B may have a higher transmission priority.

In some embodiments, the transmission priority may be determined based on the number of retransmissions of information. For example, if at least one channel uses a repetition transmission mechanism, a channel with a higher number of retransmissions may have a lower transmission priority, while a channel with a lower number of retransmissions may have a higher transmission priority.

In some embodiments, the transmission priority may be determined based on the redundancy version of the transport block (TB). For example, for a data channel, the transmission priority may be determined based on a redundancy version of the TB transmitted on uplink and downlink channels, e.g., a priority order of redundancy versions may be: RV#0 〉 RV#2 〉 RV#3 〉 RV#1.

In some embodiments, the transmission priority may be determined based on the channel type and/or the signal type. For example, if scheduling resources corresponding to the DG downlink and the DG uplink overlap in the time domain, the transmission priority may be determined based on the channel type and/or the signal type. For example, a transmission priority of the DG PUCCH is higher than transmission priorities of all DG downlink channels and/or signals; a transmission priority of the DG PUSCH is higher than transmission priorities of the DG Channel State Information-Reference Signal (CSI-RS); a transmission priority of the DG PDSCH is higher than transmission priorities of the DG Sounding Reference Signal (SRS), etc.

For another example, in a case that scheduling resources corresponding to semi-static dedicated downlink and semi-static dedicated uplink overlap in the time domain, it may be determined, based on the channel type and/or the signal type, that a transmission priority of the USS PDCCH is higher than transmission priorities of all uplink channels and/or signals; a transmission priority of the PUCCH is higher than transmission priorities of any other downlink channels and/or signals except the USS PDCCH; a transmission priority of the PUSCH is higher than a transmission priority of the CSI-RS; a transmission priority of the PDSCH is higher than a transmission priority of the SRS.

For another example, in a case that scheduling resources corresponding to a semi-static dedicated uplink and a semi-static cell-specific downlink overlap in the time domain, the following several methods may be adopted.

Method 1: transmission priorities of Type-0 CSS PDCCH, Type-0A CSS PDCCH, Type-1 CSS PDCCH, and Type-2 CSS PDCCH are higher than a transmission priority of the uplink channel/uplink signal.

Method 2: for Type-0 CSS, Type-0A CSS, Type-1 CSS, and Type-2 CSS, if a specific terminal actually needs to monitor the PDCCH, a transmission priority of the PDCCH is higher than that of the uplink channel/signal; if the terminal does not actually need to monitor the PDCCH on configured resources even though the resources have been configured, the transmission priority of the PDCCH is lower than that of the uplink channel/signal. For example, the terminal does not actually need to update system information (SI), e.g., when the terminal is not in a modification period, the terminal does not need to monitor paging in a paging search space (Type-2 CSS), or when the terminal has not initiated a RACH procedure, the terminal does not need to monitor a random access search space (RA-searchspace, i.e., Type-1 CSS), etc.

Furthermore, the aforementioned methods for determining transmission priority may be used in combination. For example, the HD-FDD terminal first determines whether the network device has provided configuration/indication information for a channel priority. If no such configuration/indication information is available, the transmission priority may be determined based on at least one of the other methods (e.g., C4 to H4). In addition, specific methods to be used and their priority order may be defined by a protocol; or the protocol may define at least some of the methods while the specific methods to be used and their priority order are further configured/indicated by the network device.

In some embodiments, the transmission priority may be used to determine that the HD-FDD terminal performs a unidirectional transmission in a case that scheduling resources of the uplink transmission and the downlink transmission overlap in the time domain. In some examples, determining the transmission behavior of the HD-FDD terminal according to the transmission priority specifically includes: in a case that a priority of the uplink transmission is higher than a priority of the downlink transmission, cancelling, by the HD-FDD terminal, reception of information from a network device, e.g., the HD-FDD terminal transmits information to the network device while canceling reception of information from the network device; or, in a case that the priority of the uplink transmission is lower than the priority of the downlink transmission, cancelling, by the HD-FDD terminal, transmission of information to the network device, e.g., the HD-FDD terminal receives information from the network device while canceling transmission of information to the network device.

In some embodiments, transmission cancellation may be performed only on overlapping time-domain resources of the downlink and the uplink, e.g., canceling reception of information from the network device or canceling transmission of information to the network device, while transmission on other non-overlapping time-domain resources of the downlink and the uplink continues.

To ensure that some transmissions can be accurately canceled, in some examples, in a case that the priority of the uplink transmission is lower than the priority of the downlink transmission, the HD-FDD terminal cancels transmission of information to the network device, which may specifically include one of methods A5 to D5.

A5. In a case that the priority of the uplink transmission is lower than the priority of the downlink transmission, and a duration from a time when DCI is received by the HD-FDD terminal to a start time of the uplink transmission is less than a first threshold, the HD-FDD terminal does not expect to cancel the uplink transmission on overlapping time-domain resources. The first threshold is determined based on a PUSCH preparation time, and the PUSCH preparation time is determined based on a processing capability 1 of the HD-FDD terminal. For example, if the priority of the uplink transmission is lower than the priority of the downlink transmission, and the duration from the time when the DCI is received by the HD-FDD terminal to the start time of the uplink transmission is less than the first threshold, this indicates insufficient time to cancel the uplink transmission, and the HD-FDD terminal does not expect to cancel the uplink transmission on the overlapping time-domain resources.

B5. In a case that the priority of the uplink transmission is lower than the priority of the downlink transmission, and the duration from a time when DCI is received by the HD-FDD terminal to a start time of the uplink transmission is greater than a first threshold, the HD-FDD terminal cancels the transmission of information to the network device. For example, if the priority of the uplink transmission is lower than the priority of the downlink transmission, and the duration from the time when DCI is received by the HD-FDD terminal to the start time of the uplink transmission is greater than the first threshold, this indicates sufficient time to cancel the uplink transmission, and the HD-FDD terminal receives information from the network device while canceling the transmission of information to the network device.

C5. In a case that the priority of the uplink transmission is lower than the priority of the downlink transmission, and the duration from a time when DCI is received by the HD-FDD terminal to a start time of the uplink transmission is less than a first threshold, the HD-FDD terminal does not expect to cancel the uplink transmission on overlapping time-domain resources within a first time range, and the HD-FDD terminal cancels the uplink transmission on remaining overlapping time-domain resources outside the first time range. In some examples, the first time range is determined as a time range during which X symbols from a start of the DCI overlap with the uplink transmission, where X is a positive integer.

For example, for overlapping between a Sounding Reference Signal (SRS) and a downlink transmission, it is assumed that overlapping time-domain resources of a PUSCH corresponding to the SRS and a PDSCH are symbols 0 to 5; a transmission priority of the PUSCH corresponding to the SRS is lower than a transmission priority of the PDSCH, a duration from the time when DCI is received by the HD-FDD terminal to a start time of the SRS is less than the first thresholdTrpocessing, 1; and a range from a DCI end position to the DCI end position plus Trpocessing, 1 covers symbols 0 to 3. Then, for the uplink transmission, the transmission on symbols 0 to 3 is not canceled, the transmission on symbols 3 to 5 is canceled, and the transmission on symbols 5 to X is not canceled.

D5. In a case that the priority of the uplink transmission is lower than the priority of the downlink transmission, and the duration from a time when DCI is received by the HD-FDD terminal to a start time of the uplink transmission is less than a first threshold, the HD-FDD terminal does not expect to cancel the uplink transmission on overlapping time-domain resources within a first time range, and the HD-FDD terminal cancels the uplink transmission on the remaining allocated resources outside the first time range.

For example, for overlapping between an uplink transmission other than the SRS and a downlink transmission, it is assumed that overlapping time-domain resources of a PDSCH and a PUSCH are symbols 0 to 5; a transmission priority of the PUSCH is lower than a transmission priority of the PDSCH, the duration from reception of the DCI by the HD-FDD terminal to the start time of the PUSCH is less than the first threshold Trpocessing, 1, and a range from the DCI end position to the DCI end position plus Trpocessing, 1 includes symbols 0 to 3, then for the uplink transmission, the transmission on symbol 0 to symbol 3 is not canceled, and the transmission on symbol 3 to symbol X is canceled.

In some embodiments, considering that the network device cannot accurately know the timing relationship between uplink and downlink on the HD-FDD terminal side, it may still simultaneously transmit the PDSCH and receive the PUSCH, depending on implementation of the network device, even if it is not aware of whether overlapping time-domain resources have occurred between uplink and downlink transmissions of the HD-FDD terminal.

As shown above, the transmission behavior of the HD-FDD terminal is determined according to the transmission priority to handle an overlap of scheduling resources corresponding to uplink and downlink transmissions in the time domain. In some embodiments, the transmission behavior of the HD-FDD terminal may also be determined according to the first duration corresponding to TA pre-compensation reporting to handle the overlap of the scheduling resources corresponding to the uplink and downlink transmissions in the time domain. In some examples, the HD-FDD terminal performs a unidirectional transmission or does not perform any transmission within the first duration.

For example, the first duration is determined to be a time gap. Within this time gap, the HD-FDD terminal expects only unidirectional signal/channel transmission, or does not expect any signal/channel transmission or reception.

In some embodiments, the first duration may be determined based on a time when the HD-FDD terminal triggers the TA pre-compensation reporting, or based on a time of a most recent TA pre-compensation adjustment by the HD-FDD terminal.

For example, the first duration is determined based on a duration from a time at which the HD-FDD terminal triggers TA pre-compensation reporting to a time at which the network device receives a reported TA pre-compensation value.

For another example, the last TA pre-compensation value reported by the HD-FDD terminal is V0, and the HD-FDD terminal most recently performed TA pre-compensation adjustment according to V1, if the difference (V1 - V0) exceeds a certain threshold delta_T1 but is less than delta_T2, where delta_T2 is a timing advance offset threshold (offsetThresholdTA), then the first duration may be determined based on a time interval A between the most recent TA pre-compensation adjustment and subsequent TA pre-compensation reporting by the HD-FDD terminal. Alternatively, the first duration may be determined based on a time interval B between the most recent TA pre-compensation and a subsequent TA pre-compensation adjustment (V2) by the HD-FDD terminal, where the TA pre-compensation difference (V2 - V0) does not exceed delta_T1. In some examples, the threshold delta_T1 may be 0.

In some possible embodiments, a maximum TA pre-compensation value may be determined based on at least one of satellite ephemeris information or a terminal location, and the maximum TA pre-compensation value may be directly used as the first duration corresponding to the TA pre-compensation reporting and/or a second duration for switching between the uplink and the downlink.

In some possible embodiments, the value of offsetThresholdTA may be directly used as the first duration corresponding to the TA pre-compensation reporting and/or the second duration for switching between the uplink and the downlink.

In some embodiments, a length of the first duration is determined based on at least one of the following items.

A6. Uplink one-way propagation delay. For example, an uplink MAC CE one-way propagation delay may be a maximum propagation delay predefined in a protocol, e.g., determined based on different scenarios such as Low Earth Orbit (LEO), Geosynchronous Earth Orbit (GEO), and Medium Earth Orbit (MEO). Alternatively, it may be a service-link propagation delay determined by the HD-FDD terminal based on its own position and satellite ephemeris information, or a propagation delay configured by the network device.

B6. One-way propagation delay of a feeder link between the network device and a satellite, e.g., a one-way propagation delay of a feeder link between a base station and the satellite.

C6. Average scheduling waiting delay, e.g., an average scheduling delay predefined by the protocol or an average scheduling delay configured by the network device.

In some embodiments, the transmission behavior of the HD-FDD terminal may also be determined based on a second duration for switching between the uplink and the downlink (downlink-uplink switching time) to address overlap in scheduling resources corresponding to uplink and downlink transmissions in the time domain. In some examples, the HD-FDD terminal does not perform any transmission within the second duration. For example, during the switching time, the HD-FDD terminal does not transmit or receive any channel or signal.

In some embodiments, the second duration, i.e., the switching time, may be determined based on a TA pre-compensation value, or a difference between a TA pre-compensation value of the HD-FDD terminal and a TA related value of a network device.

In some examples, determining the second duration may specifically include: determining the second duration based on a user equipment-specific timing advance (UE-specific TA, i.e., a TA value pre-compensated on the terminal side from the terminal to the satellite), and/or a satellite altitude, and/or a timing advance offset threshold (offsetThresholdTA) configured by a network device, and/or a cell-common timing advance (cell-common TA, i.e., a TA value from the network to the base station).

For example, the switching time is determined based on the TA pre-compensation value or the pre-compensation difference. For a scenario where a synchronization reference point is a satellite, the TA is a UE-specific TA. The HD-FDD terminal determines the switching time based on at least one of the following factors.

A7. The switching time includes a UE-specific TA determined by the HD-FDD terminal divided by N, e.g., N=2.

B7. The switching time is determined based on different satellite altitudes, e.g., GEO, LEO, and MEO, and the switching time includes a maximum UE-specific TA for a serving cell in a specific satellite scenario divided by N, e.g., N = 2.

C7. The switching time includes offsetThresholdTA configured by the network device divided by N, e.g., N=2.

For another example, the switching time is determined based on the TA pre-compensation value or the pre-compensation difference. For a scenario where a synchronization reference point is a network device, the TA includes a UE-specific TA and a cell-common TA (e.g., for a link between the network device and the satellite). The HD-FDD terminal may determine the switching time based on at least one of the following factors.

A8. The switching time includes a UE-specific TA determined by the HD-FDD terminal divided by N, e.g., N=2.

B8. The switching time is determined based on different satellite altitudes, such as GEO, LEO, and MEO, and the switching time includes a maximum UE-specific TA for the serving cell in a specific satellite scenario divided by N, e.g., N=2.

C8. The switching time includes offsetThresholdTA configured by the network device divided by N, e.g., N=2.

D8. The switching time includes a cell-common TA divided by N, e.g., N=2.

In some embodiments, the transmission behavior of the HD-FDD terminal may also be determined based on a first cell accessed by the HD-FDD terminal to process the overlap of the scheduling resources corresponding to the uplink transmission and the downlink transmission in the time domain.

In some examples, determining the transmission behavior of the HD-FDD terminal based on the first cell accessed by the HD-FDD terminal may specifically include:
in a case that the first cell is a cell of a terrestrial network (TN), performing, by the HD-FDD terminal, a first behavior; or in a case that the first cell is a cell of a non-terrestrial network (NTN), not performing, by the HD-FDD terminal, the first behavior.

For example, no restrictions are imposed on scheduling of NTN network devices. The following behavior is applicable only to HD-FDD terminals in TN networks and not to HD-FDD terminals in NTN networks. In this manner, scheduling by the network device may be relied upon as much as possible to avoid overlapping time-domain resources between uplink and downlink. However, if overlapping time-domain resources between uplink and downlink occur, the behavior of the HD-FDD terminal depends on terminal implementation. Alternatively, overlapping time-domain resources corresponding to downlink and uplink scheduling are no longer treated as an exception or anomaly, thereby reducing scheduling requirements and restrictions on the network device.

For example, the first behavior may be that the HD-FDD terminal does not expect to detect a DCI scheduling downlink reception and uplink transmission on overlapping symbol resources. However, an HD-FDD terminal operating in an NTN network does not perform the first behavior, that is, the HD-FDD terminal devices operating in the NTN network are excluded.

For another example, the first behavior may include: if the scheduling resources corresponding to the semi-persistent uplink and the semi-persistent downlink overlap in the time domain, the HD-FDD terminal does not expect to be configured with dedicated higher-layer parameters for downlink reception and uplink transmission in the overlapping symbol resources. However, an HD-FDD terminal operating in an NTN network do not perform this first behavior, i.e., the HD-FDD terminal devices operating in the NTN network are excluded. Furthermore, the first behavior may also include: if the scheduling resources corresponding to the semi-persistent uplink and the semi-persistent downlink overlap in the time domain, the HD-FDD terminal does not expect to be configured with Type-0/0A/1/2-PDCCH CSS sets for PDCCH reception and dedicated higher-layer parameters for uplink transmission in the overlapping symbol resources. However, an HD-FDD terminals operating in an NTN network do not perform the first behavior, i.e., HD-FDD terminal devices operating in the NTN network are excluded.

It should be noted that in different scenarios where the scheduling resources corresponding to the uplink transmission and the downlink transmission overlap in the time domain, the above different processing methods may also be used, and the specific method to be used may be determined according to actual needs.

In the embodiments, for an HD-FDD terminal in an NTN network, first information may be determined, and a transmission behavior of the HD-FDD terminal may be determined according to the first information, thereby specifying the transmission behavior of the HD-FDD terminal. The transmission behavior can be used to handle an overlap of scheduling resources corresponding to uplink and downlink transmissions in a time domain, so as to reduce configuration or scheduling requirements of the network device, reduce the complexity of configuration or scheduling of the network device, lower the energy consumption of both the HD-FDD terminal and the network device, and avoid the waste of spectrum resources.

To illustrate specific execution processes of the HD-FDD terminal, FIG. 3 shows a flow chart of a communication method according to an embodiment of the present disclosure, which is performed by the HD-FDD terminal side and may include the following steps.

Step S301: the HD-FDD terminal determines first information.

In some embodiments, the HD-FDD terminal may determine the first information according to a rule predefined by a protocol.

In some embodiments, the HD-FDD terminal may receive the first information transmitted by the network device.

In some embodiments, the HD-FDD terminal may calculate the first information by itself, such as calculating the first information based on satellite ephemeris information, its own position information, and the like.

In some examples, in a case that the HD-FDD terminal determines the first information according to the rule predefined by the protocol or calculates the first information by itself, the HD-FDD terminal may transmit the first information to the network device so that the network device may make corresponding scheduling adjustments according to the first information.

Step S302: the HD-FDD terminal determines a transmission behavior of the HD-FDD terminal according to the first information.

In some embodiments, the transmission behavior is used to handle an overlap of scheduling resources corresponding to an uplink transmission and a downlink transmission in a time domain.

In some embodiments, the first information includes at least one of:
a transmission priority; a first duration corresponding to timing advance (TA) pre-compensation reporting; a second duration for switching between an uplink and a downlink; or a first cell accessed by the HD-FDD terminal.

In some embodiments, the transmission priority includes at least one of:
a priority of the uplink transmission; a priority of the downlink transmission; priorities of different channels; or priorities of different signals.

In some embodiments, the transmission priority is determined based on at least one of:
a reception timing relationship of first downlink control information (DCI); a transmission cancellation condition; a number of retransmissions of information; a redundancy version of a transport block; a channel type; a signal type; first indication information; or a rule predefined by a protocol.

In some embodiments, the first DCI includes: scheduling DCI and/or activation DCI.

In some embodiments, determining the transmission behavior of the HD-FDD terminal according to the transmission priority includes: in a case that a priority of the uplink transmission is higher than a priority of the downlink transmission, cancelling, by the HD-FDD terminal, reception of information from a network device; or in a case that the priority of the uplink transmission is lower than the priority of the downlink transmission, cancelling, by the HD-FDD terminal, transmission of information to the network device.

In some embodiments, in the case that the priority of the uplink transmission is lower than the priority of the downlink transmission, cancelling, by the HD-FDD terminal, the transmission of the information to the network device includes at least one of: in a case that the priority of the uplink transmission is lower than the priority of the downlink transmission, and a duration from a time when DCI is received by the HD-FDD terminal to a start time of the uplink transmission is less than a first threshold, not expecting, by the HD-FDD terminal, to cancel the uplink transmission on overlapping time-domain resources; in a case that the priority of the uplink transmission is lower than the priority of the downlink transmission, and the duration from a time when DCI is received by the HD-FDD terminal to a start time of the uplink transmission is greater than the first threshold, cancelling, by the HD-FDD terminal, the transmission of the information to the network device; or in a case that the priority of the uplink transmission is lower than the priority of the downlink transmission, and the duration from a time when DCI is received by the HD-FDD terminal to a start time of the uplink transmission is less than the first threshold, not expecting, by the HD-FDD terminal, to cancel the uplink transmission on overlapping time-domain resources within a first time range, and cancelling, by the HD-FDD terminal, the uplink transmission on remaining overlapping time-domain resources outside the first time range.

In some embodiments, the HD-FDD terminal performs a unidirectional transmission or does not perform any transmission within the first duration.

In some embodiments, the first duration is determined based on a time when the HD-FDD terminal triggers the TA pre-compensation reporting, or based on a time of a most recent TA pre-compensation adjustment by the HD-FDD terminal.

In some embodiments, a length of the first duration is determined based on at least one of:
an uplink one-way propagation delay; a one-way propagation delay of a feeder link between a network device and a satellite; or an average scheduling waiting delay.

In some embodiments, the HD-FDD terminal does not perform any transmission within the second duration.

In some embodiments, the second duration is determined based on a TA pre-compensation value, or a difference between a TA pre-compensation value of the HD-FDD terminal and a TA related value of a network device.

In some embodiments, determining the second duration includes: determining the second duration based on a user equipment-specific timing advance (UE-specific TA), and/or a satellite altitude, and/or a timing advance offset threshold (offsetThresholdTA) configured by a network device, and/or a cell-common timing advance (cell-commonTA).

In some embodiments, determining the transmission behavior of the HD-FDD terminal according to the first cell includes: in a case that the first cell is a cell of a terrestrial network (TN), performing, by the HD-FDD terminal, a first behavior; or in a case that the first cell is a cell of a non-terrestrial network (NTN), not performing, by the HD-FDD terminal, the first behavior.

For descriptions of specific examples in this embodiment, please refer to the corresponding descriptions of the embodiments in FIG. 1 and FIG. 2, which will not be repeated here.

In the embodiments, for an HD-FDD terminal in an NTN network, first information may be determined, and a transmission behavior of the HD-FDD terminal may be determined according to the first information, thereby specifying the transmission behavior of the HD-FDD terminal. The transmission behavior can be used to handle an overlap of scheduling resources corresponding to uplink and downlink transmissions in a time domain, so as to reduce configuration or scheduling requirements of the network device, reduce the complexity of configuration or scheduling of the network device, lower the energy consumption of both the HD-FDD terminal and the network device, and avoid the waste of spectrum resources.

FIG. 4 shows a flow chart of a communication method according to an embodiment of the present disclosure. As shown in FIG. 4, the method is performed by the network device side and may include the following steps.

Step S401: the network device transmits first information to a HD-FDD terminal.

The first information is used to determine a transmission behavior of the HD-FDD terminal, and the transmission behavior is used to handle an overlap of scheduling resources corresponding to an uplink transmission and a downlink transmission in a time domain.

In some embodiments, the first information includes at least one of:
a transmission priority; a first duration corresponding to timing advance (TA) pre-compensation reporting; a second duration for switching between an uplink and a downlink; or a first cell accessed by the HD-FDD terminal.

In some embodiments, the transmission priority includes at least one of:
a priority of the uplink transmission; a priority of the downlink transmission; priorities of different channels; or priorities of different signals.

In some embodiments, the transmission priority is determined based on at least one of:
a reception timing relationship of first downlink control information (DCI); a transmission cancellation condition; a number of retransmissions of information; a redundancy version of a transport block; a channel type; a signal type; first indication information; or a rule predefined by a protocol.

In some embodiments, the first DCI includes: scheduling DCI and/or activation DCI.

In some embodiments, the transmission priority is used to determine that the HD-FDD terminal performs a unidirectional transmission.

In some embodiments, the HD-FDD terminal performs a unidirectional transmission or does not perform any transmission within the first duration.

In some embodiments, the first duration is determined based on at least one of:
a time when the HD-FDD terminal triggers the TA pre-compensation reporting; or a time of a most recent TA pre-compensation adjustment by the HD-FDD terminal.

In some embodiments, a length of the first duration is determined based on at least one of:
an uplink one-way propagation delay; a one-way propagation delay of a feeder link between the network device and a satellite; or an average scheduling waiting delay.

In some embodiments, the HD-FDD terminal does not perform any transmission within the second duration.

In some embodiments, the second duration is determined based on one of:
a TA pre-compensation value; or a difference between a TA pre-compensation value of the HD-FDD terminal and a TA related value of the network device.

In some embodiments, the first cell is a cell of a terrestrial network (TN) or a cell of a non-terrestrial network (NTN).

For descriptions of specific examples in this embodiment, please refer to the corresponding descriptions of the embodiments in FIG. 1 to FIG. 3, which will not be repeated here.

In the embodiments, for an HD-FDD terminal in an NTN network, first information may be determined, and a transmission behavior of the HD-FDD terminal may be determined according to the first information, thereby specifying the transmission behavior of the HD-FDD terminal. The transmission behavior can be used to handle an overlap of scheduling resources corresponding to uplink and downlink transmissions in a time domain, so as to reduce configuration or scheduling requirements of the network device, reduce the complexity of configuration or scheduling of the network device, lower the energy consumption of both the HD-FDD terminal and the network device, and avoid the waste of spectrum resources.

An embodiment of the present disclosure further provides an apparatus for implementing any of the above methods. For example, an apparatus is provided, including units or modules for performing steps performed by a terminal in any of the above methods. As another example, another apparatus is provided, including units or modules for performing steps performed by a network device (e.g., an access network device, a core network function node, a core network device, etc.) in any of the above methods.

It should be understood that the division of units or modules in the above apparatus is merely a division of logical functions. In actual implementation, they may be fully or partially integrated into one physical entity, or may be physically separate. In addition, the units or modules in the apparatus may be implemented in the form of a processor invoking software: for example, the apparatus includes a processor, the processor is connected to a memory storing instructions, and the processor invokes the instructions stored in the memory to implement any of the above methods or to implement functions of the units or modules of the apparatus. The processor may be, for example, a general-purpose processor, such as a central processing unit (CPU) or a microprocessor, and the memory may be a memory internal to the apparatus or external to the apparatus. Alternatively, the units or modules in the apparatus may be implemented in the form of a hardware circuit, and functions of some or all of the units or modules may be implemented by designing the hardware circuits. The above hardware circuits may be understood as one or more processors. For example, in one implementation, the hardware circuit is an application-specific integrated circuit (ASIC), and functions of some or all of the units or modules are implemented by designing logical relationships of components in the circuit. In another implementation, the hardware circuit may be implemented by a programmable logic device (PLD). Taking a field programmable gate array (FPGA) as an example, it may include a large number of logic gate circuits, and connection relationships between the logic gate circuits are configured by a configuration file, thereby implementing functions of some or all of the units or modules. All units or modules of the above apparatus may be implemented entirely by a processor invoking software, entirely by hardware circuits, or partially by a processor invoking software and the remaining part by hardware circuits.

In the embodiments of the present disclosure, the processor is a circuit having signal processing capabilities. In one implementation, the processor may be a circuit capable of reading and executing instructions, such as a central processing unit (CPU), a microprocessor, a graphics processing unit (GPU) (which may be understood as a microprocessor), or a digital signal processor (DSP). In another implementation, the processor may implement certain functions through logical relationships of hardware circuits, and the logical relationships of the hardware circuits may be fixed or reconfigurable. For example, the processor may be a hardware circuit implemented as an application-specific integrated circuit (ASIC) or a programmable logic device (PLD), such as an FPGA. In a reconfigurable hardware circuit, the process in which the processor loads a configuration file to configure the hardware circuit may be understood as a process in which the processor loads instructions to implement functions of some or all of the units or modules. In addition, the processor may also be a hardware circuit designed for artificial intelligence, which may be understood as an ASIC, such as a neural network processing unit (NPU), a tensor processing unit (TPU), a deep learning processing unit (DPU), etc.

FIG. 5 is a schematic structural diagram of a terminal provided by an embodiment of the present disclosure. As shown in FIG. 5, the terminal may include: at least one of a processing module 51, etc. In some embodiments, the processing module 51 is configured to obtain first information; and determine a transmission behavior of the HD-FDD terminal according to the first information, where the transmission behavior is used to handle an overlap of scheduling resources corresponding to an uplink transmission and a downlink transmission in a time domain. Optionally, the processing module 51 is configured to perform at least one of communication steps such as transmitting and/or receiving (e.g., step S201, but not limited thereto) performed by the terminal in any of the above methods, which will not be described again here. Optionally, the processing module 51 is further configured to perform at least one of other steps (e.g., step S202, but not limited thereto) performed by the terminal in any of the above methods, which will not be described again here.

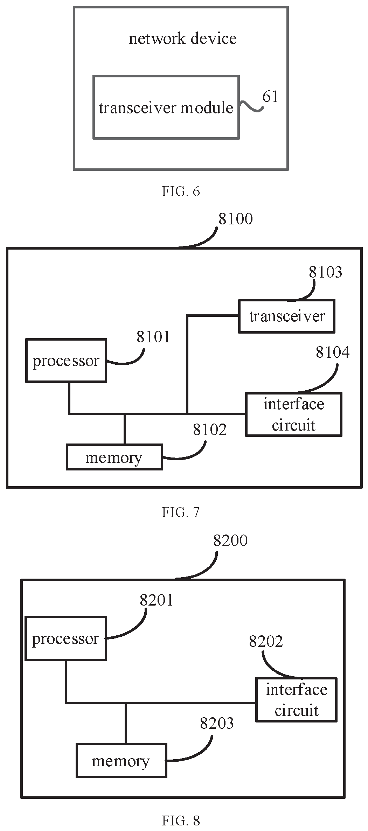

FIG. 6 is a schematic structural diagram of a network device provided by an embodiment of the present disclosure. As shown in FIG. 6, the terminal may include a transceiver module 61. In some embodiments, the transceiver module 61 is configured to transmit first information, where the first information is used to determine a transmission behavior of the HD-FDD terminal, and the transmission behavior is used to handle an overlap of scheduling resources corresponding to an uplink transmission and a downlink transmission in a time domain, which will not be described again here.

In some embodiments, the transceiver module 61 may include a transmitting module and/or a receiving module, and the transmitting module and the receiving module may be separate or integrated. Optionally, the transceiver module may be interchangeable with a transceiver.

In some embodiments, the processing module 51 may be a single module or may include multiple submodules. Optionally, the multiple submodules respectively perform all or part of the steps required to be performed by the processing module. Optionally, the processing module may be interchangeable with a processor.

FIG. 7 is a schematic structural diagram of a communication device 8100 according to an embodiment of the present disclosure. The communication device 8100 may be a network device (e.g., an access network device, a core network device, etc.), a terminal (e.g., a user equipment, etc.), a chip, a chip system, or a processor that supports a network device in implementing any of the above methods, or a chip, a chip system, or a processor that supports a terminal in implementing any of the above methods. The communication device 8100 may be configured to implement the methods described in the above method embodiments, and reference may be made to the description in the above method embodiments for details.

As shown in FIG. 7, the communication device 8100 includes one or more processors 8101. The processor 8101 may be a general-purpose processor or a dedicated processor, such as a baseband processor or a central processing unit. The baseband processor may be configured to process communication protocols and communication data, and the central processing unit may be configured to control the communication device (e.g., a base station, a baseband chip, a terminal device, a terminal device chip, a DU or a CU, etc.), execute a program, and process data of the programs. Optionally, the communication device 8100 is configured to perform any of the above methods. Optionally, the one or more processors 8101 are configured to invoke instructions to cause the communication device 8100 to perform any of the above methods.

In some embodiments, the communication device 8100 further includes one or more transceivers 8102. In a case that the communication device 8100 includes one or more transceivers 8102, the transceiver 8102 performs at least one of the communication steps such as transmitting and/or receiving in the above method (for example, step S201, but not limited thereto), and the processor 8101 performs at least one of communication steps such as transmitting and/or receiving (e.g., step S201, but not limited thereto) in the above methods, and the processor 8101 performs at least one of other steps (e.g., step S202, but not limited thereto). In optional embodiments, the transceiver may include a receiver and/or a transmitter, and the receiver and the transmitter may be separate or integrated. Optionally, such terms as transceiver, transceiver unit, transceiver circuit, interface circuit, and interface may be interchangeable, such terms as transmitter, transmitting unit, and transmitting circuit may be interchangeable, and such terms as receiver, receiving unit, and receiving circuit may be interchangeable.

In some embodiments, the communication device 8100 further includes one or more memories 8103 for storing data. Optionally, all or part of the memories 8103 may be located outside the communication device 8100. In optional embodiments, the communication device 8100 may include one or more interface circuits 8104. Optionally, the interface circuits 8104 are connected to the memory 8103, and may be configured to receive data from the memory 8103 or other apparatuses, or to transmit data to the memory 8103 or other apparatuses. For example, the interface circuits 8104 may read data stored in the memory 8103 and transmit the data to the processor 8101.

The communication device 8100 described in the above embodiments may be a network device or a terminal, but the scope of the communication device 8100 described in the present disclosure is not limited thereto, and the structure of the communication device 8100 is not limited to that shown in FIG. 7. The communication device may be an independent device or may be part of a larger device. For example, the communication device may be: (1) an independent integrated circuit (IC), or a chip, or a chip system or subsystem; (2) a set of one or more ICs, optionally including a storage component for storing data and/or programs; (3) an ASIC, such as a modem; (4) a module embeddable in other devices; (5) a receiver, a terminal device, an intelligent terminal device, a cellular phone, a wireless device, a handset, a mobile unit, a vehicle-mounted device, a network device, a cloud device, an artificial intelligence device, etc.; or (6) others, etc.

FIG. 8 is a schematic structural diagram of a chip 8200 according to an embodiment of the present disclosure. For cases where the communication device 8100 is a chip or a chip system, reference may be made to the schematic structural diagram of the chip 8200 shown in FIG. 8, but the present disclosure is not limited thereto.

The chip 8200 includes one or more processors 8201. The chip 8200 is configured to execute any of the above methods.

In some embodiments, the chip 8200 further includes one or more interface circuits 8202. Optionally, terms such as interface circuit, interface, and transceiver pin may be interchangeable. In some embodiments, the chip 8200 further includes one or more memories 8203 for storing data. Optionally, all or part of the memories 8203 may be located outside the chip 8200. Optionally, the interface circuits 8202 are connected to the memories 8203, and may be configured to receive data from the memories 8203 or other apparatuses, or to transmit data to the memories 8203 or other apparatuses. For example, the interface circuits 8202 may read data stored in the memories 8203 and transmit the data to the processor 8201.

In some embodiments, the interface circuits 8202 perform at least one of communication steps such as transmitting and/or receiving (e.g., step S201, but not limited thereto) in the above methods. That the interface circuits 8202 perform communication steps such as transmitting and/or receiving in the above methods means, for example, that the interface circuits 8202 perform data exchange between the processor 8201, the chip 8200, the memories 8203, or a transceiver device. In some embodiments, the processor 8201 performs at least one of other steps (e.g., steps S202 and S203, but not limited thereto).

The modules and/or devices described in various embodiments, such as virtual apparatuses, physical apparatuses, and chips, may be arbitrarily combined or separated as appropriate. Optionally, some or all steps may also be performed collaboratively by multiple modules and/or devices, which is not limited herein.

The present disclosure further provides a storage medium having instructions stored thereon. The instructions, when executed on a communication device 8100, cause the communication device 8100 to perform any of the above methods. Optionally, the storage medium is an electronic storage medium. Optionally, the storage medium is a computer-readable storage medium, but is not limited thereto, and may also be a storage medium readable by other apparatuses. Optionally, the storage medium may be a non-transitory storage medium, but is not limited thereto, and may also be a transitory storage medium.

The present disclosure further provides a program product which, when executed by a communication device 8100, causes the communication device 8100 to perform any of the above methods. Optionally, the program product is a computer program product.

The present disclosure further provides a computer program which, when executed on a computer, causes the computer to perform any of the above methods.

## Claims

1. A communication method, performed by a half-duplex frequency division duplexing (HD-FDD) terminal, comprising:
determining first information; and
determining a transmission behavior of the HD-FDD terminal according to the first information, wherein the transmission behavior is used to handle an overlap of scheduling resources corresponding to an uplink transmission and a downlink transmission in a time domain.

2. The method according to claim 1, wherein the first information comprises at least one of:
a transmission priority;
a first duration corresponding to timing advance (TA) pre-compensation reporting;
a second duration for switching between an uplink and a downlink; or
a first cell accessed by the HD-FDD terminal.

3. The method according to claim 2, wherein the transmission priority comprises at least one of:
a priority of the uplink transmission;
a priority of the downlink transmission;
priorities of different channels; or
priorities of different signals.

4. The method according to claim 2 or 3, wherein the transmission priority is determined based on at least one of:
a reception timing relationship of first downlink control information (DCI);
a transmission cancellation condition;
a number of retransmissions of information;
a redundancy version of a transport block;
a channel type;
a signal type;
first indication information; or
a rule predefined by a protocol.

5. The method according to claim 4, wherein the first DCI comprises scheduling DCI and/or activation DCI.

6. The method according to any one of claims 2 to 5, wherein determining the transmission behavior of the HD-FDD terminal according to the transmission priority comprises:
cancelling, by the HD-FDD terminal, reception of information from a network device, wherein a priority of the uplink transmission is higher than a priority of the downlink transmission,; or
cancelling, by the HD-FDD terminal, transmission of information to the network device, wherein the priority of the uplink transmission is lower than the priority of the downlink transmission.

7. The method according to claim 6, wherein in the case that the priority of the uplink transmission is lower than the priority of the downlink transmission, cancelling, by the HD-FDD terminal, the transmission of the information to the network device comprises at least one of:
not expecting, by the HD-FDD terminal, to cancel the uplink transmission on overlapping time-domain resources, wherein the priority of the uplink transmission is lower than the priority of the downlink transmission, and a duration from a time when DCI is received by the HD-FDD terminal to a start time of the uplink transmission is less than a first threshold;
cancelling, by the HD-FDD terminal, the transmission of the information to the network device, wherein the priority of the uplink transmission is lower than the priority of the downlink transmission, and the duration from a time when DCI is received by the HD-FDD terminal to a start time of the uplink transmission is greater than the first threshold; or
not expecting, by the HD-FDD terminal, to cancel the uplink transmission on overlapping time-domain resources within a first time range, and cancelling, by the HD-FDD terminal, the uplink transmission on remaining overlapping time-domain resources outside the first time range, wherein the priority of the uplink transmission is lower than the priority of the downlink transmission, and the duration from a time when DCI is received by the HD-FDD terminal to a start time of the uplink transmission is less than the first threshold.

8. The method according to any one of claims 2 to 7, wherein the HD-FDD terminal performs a unidirectional transmission or does not perform any transmission within the first duration.

9. The method according to any one of claims 2 to 8, further comprising:
determining the first duration based on a time when the HD-FDD terminal triggers the TA pre-compensation reporting, or based on a time of a most recent TA pre-compensation adjustment by the HD-FDD terminal.

10. The method according to any one of claims 2 to 9, wherein a length of the first duration is determined based on at least one of:
an uplink one-way propagation delay;
a one-way propagation delay of a feeder link between a network device and a satellite; or
an average scheduling waiting delay.

11. The method according to any one of claims 2 to 10, wherein the HD-FDD terminal does not perform any transmission within the second duration.

12. The method according to any one of claims 2 to 11, further comprising:
determining the second duration based on a TA pre-compensation value; or
determining the second duration based on a difference between a TA pre-compensation value of the HD-FDD terminal and a TA related value of a network device.

13. The method according to any one of claims 2 to 12, wherein the second duration is determined based on at least one of:
a user equipment-specific timing advance (UE-specific TA);
a satellite altitude;
a timing advance offset threshold (offsetThresholdTA) configured by a network device; or
a cell-common timing advance (cell-common TA).

14. The method according to any one of claims 2 to 13, wherein determining the transmission behavior of the HD-FDD terminal according to the first cell comprises:
performing, by the HD-FDD terminal, a first behavior, wherein the first cell is a cell of a terrestrial network (TN); or
not performing, by the HD-FDD terminal, the first behavior, wherein the first cell is a cell of a non-terrestrial network (NTN).

15. The method according to any one of claims 1 to 14, wherein the determining the first information comprises:
receiving the first information transmitted by a network device.

16. A communication method, performed by a network device, comprising:
transmitting first information to a half-duplex frequency division duplexing (HD-FDD) terminal,
wherein the first information is used to determine a transmission behavior of the HD-FDD terminal, and the transmission behavior is used to handle an overlap of scheduling resources corresponding to an uplink transmission and a downlink transmission in a time domain.

17. The method according to claim 16, wherein the first information comprises at least one of:
a transmission priority;
a first duration corresponding to timing advance (TA) pre-compensation reporting;
a second duration for switching between an uplink and a downlink; or
a first cell accessed by the HD-FDD terminal.

18. The method according to claim 17, wherein the transmission priority comprises at least one of:
a priority of the uplink transmission;
a priority of the downlink transmission;
priorities of different channels; or
priorities of different signals.

19. The method according to claim 17 or 18, wherein the transmission priority is determined based on at least one of:
a reception timing relationship of first downlink control information (DCI);
a transmission cancellation condition;
a number of retransmissions of information;
a redundancy version of a transport block;
a channel type;
a signal type;
first indication information; or
a rule predefined by a protocol.

20. The method according to claim 19, wherein the first DCI comprises scheduling DCI and/or activation DCI.

21. The method according to any one of claims 17 to 20, wherein the transmission priority is used to determine that the HD-FDD terminal performs a unidirectional transmission.

22. The method according to any one of claims 17 to 21, wherein the HD-FDD terminal performs a unidirectional transmission or does not perform any transmission within the first duration.

23. The method according to any one of claims 17 to 22, wherein the first duration is determined based on at least one of:
a time when the HD-FDD terminal triggers the TA pre-compensation reporting; or
a time of a most recent TA pre-compensation adjustment by the HD-FDD terminal.

24. The method according to any one of claims 17 to 23, wherein a length of the first duration is determined based on at least one of:
an uplink one-way propagation delay;
a one-way propagation delay of a feeder link between the network device and a satellite; or
an average scheduling waiting delay.

25. The method according to any one of claims 17 to 24, wherein the HD-FDD terminal does not perform any transmission within the second duration.

26. The method according to any one of claims 17 to 25, wherein the second duration is determined based on one of:
a TA pre-compensation value; or
a difference between a TA pre-compensation value of the HD-FDD terminal and a TA related value of the network device.

27. The method according to any one of claims 17 to 26, wherein the first cell is a cell of a terrestrial network (TN) or a cell of a non-terrestrial network (NTN).

28. A communication method, comprising:
transmitting, by a network device, first information to a half-duplex frequency division duplexing (HD-FDD) terminal; and
receiving, by the HD-FDD terminal, the first information, and determining a transmission behavior of the HD-FDD terminal according to the first information, wherein the transmission behavior is used to handle an overlap of scheduling resources corresponding to an uplink transmission and a downlink transmission in a time domain.

29. An HD-FDD terminal, comprising:
a processing module, configured to determine first information, and determine a transmission behavior of the HD-FDD terminal according to the first information, wherein the transmission behavior is used to handle an overlap of scheduling resources corresponding to an uplink transmission and a downlink transmission in a time domain.

30. A network device, comprising:
a transceiver module, configured to transmit first information to a half-duplex frequency division duplexing (HD-FDD) terminal, wherein the first information is used to determine a transmission behavior of the HD-FDD terminal, and the transmission behavior is used to handle an overlap of scheduling resources corresponding to an uplink transmission and a downlink transmission in a time domain.

31. A communication device, comprising:
one or more processors,
wherein the one or more processors are configured to perform the method according to any one of claims 1 to 15.

32. A communication device, comprising:
one or more processors,
wherein the one or more processors are configured to perform the method according to any one of claims 16 to 27.

33. A communication system, comprising a terminal and a network device, wherein the terminal is configured to implement the method according to any one of claims 1 to 15, and the network device is configured to implement the method according to any one of claims 16 to 27.

34. A computer storage medium, storing computer-executable instructions that, when executed by a processor, cause the method according to any one of claims 1 to 27 to be performed.
